(19) Europäisches Patentamt
European Patent Office
Office européen des brevets

(11) Publication number: 0 030 182 B1

(12) # EUROPEAN PATENT SPECIFICATION

(45) Date of publication of patent specification: 19.09.84

(51) Int. Cl.$^3$: C 08 G 63/18

(21) Application number: 80401655.8

(22) Date of filing: 19.11.80

(54) **Copolyesters of terephthalic acid, phenylhydroquinone and hydroquinone.**

(30) Priority: 19.11.79 US 95279

(43) Date of publication of application:
10.06.81 Bulletin 81/23

(45) Publication of the grant of the patent:
19.09.84 Bulletin 84/38

(84) Designated Contracting States:
DE FR GB IT

(56) References cited:
WO-A-79/00797
US-A-3 160 602
US-A-4 159 365

H.-G. ELIAS "Makromoleküle" 1971, HÜTHIG & WEPF, Basel, Heidelberg pages 309 to 310

B. VOLLMERT "Polymer Chemistry" 1973, SPRINGER, New York, Heidelberg, Berlin pages 607 to 614

E. BEHR "Hochtemperaturbeständige Kunststoffe", 1969, Carl Hanser, München, p. 65

(73) Proprietor: EASTMAN KODAK COMPANY
343 State Street
Rochester New York 14650 (US)

(72) Inventor: Jackson, Winston Jerome, Jr.
P.O. Box 511
Kingsport Tennessee (US)
Inventor: Kuhfuss, Herbert Fred
P.O. Box 511
Kingsport Tennessee (US)

(74) Representative: Parent, Yves et al
Kodak-Pathé Département des Brevets et Licences 30, rue des Vignerons B.P. 60
F-94302 Vincennes Cedex (FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 030 182 B1

**Description**

This invention relates to high molecular weight copolyesters of terephthalic acid, phenylhydroquinone and hydroquinone having a critical ratio of phenylhydroquinone to hydroquinone. These copolyesters have good melt processability, high heat resistance, high oxidative stability and high chemical resistance. These copolyesters are valuable for the manufacture of plastics, fibers, films and other shaped objects.

U.S. Patent 4,159,365 discloses copolyesters of phenylhydroquinone and terephthalic acid containing up to 10 mole percent (based on the total moles of units) of other aromatic or cycloaliphatic polyester-forming units, including hydroquinone. Ten mole percent of the "other aromatic polyester-forming units" above, if an aromatic diol, corresponds to 20 mole percent based on the total moles of aromatic diols combined. In column 2, lines 29—31, the above patent discloses: "The presence of comonomer unit depresses the melting point as would be expected." The copolyesters of this invention prepared from terephthalic acid, 50—70 mole percent phenylhydroquinone dipropionate, and 30—50 mole percent hydroquinone dipropionate melt similar to or higher than the homopolymer prepared from terephthalic acid and phenylhydroquinone dipropionate. In addition, they have unexpected chemical resistance.

U.S. Patent 3,160,602 discloses a process for the preparation of aromatic polyesters from dihydric phenols and aromatic carbonyl halides while dissolved in certain solvents. The use of phenylhydroquinone is disclosed (column 6, line 12), but there is no disclosure concerning which of the numerous copolyesters can be prepared which are sufficiently soluble in the solvents for useful molecular weights to be attained.

The copolyesters of this invention having a film- and fiberforming molecular weight consist of the following divalent radicals

A. 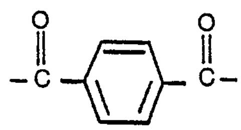

B. 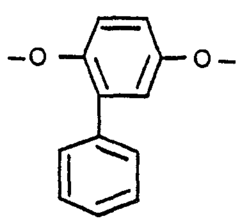 , and

C. 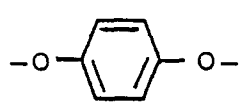

wherein (A) may optionally contain up to 20 mole percent of other aromatic dicarboxylic acid radicals, (B) is present in the amount of 50 to 70 mole percent and (C) is present in the amount of 50—30 mole percent based on total moles of (B) and (C).

According to the disclosure in U.S. Patent 4,159,365 the presence of 50—30 mole percent of (C), based on the total moles of (B) and (C), should depress the melting point of the copolyester. Unexpectedly, the melting points of the copolyesters of this invention are not lower than similar copolyesters containing 20 mole percent of (C), based on the total moles of (B) and (C). The melting points of the copolyesters of this invention are at least as high as the copolyesters containing 20 mole percent of (C), and the melting points of the copolyesters of this invention can be substantially higher.

The diacyl derivative of hydroquinone used to prepare the copolyesters of this invention contain 2 to 8 carbon atoms in the acyl group. The acetyl and propionyl derivatives are preferred, but the butyryl, isobutyryl or benzoyl derivatives are examples of others which may also be used.

Up to 20 mole percent of aromatic dicarboxylic acids other than terephthalic acid may be used in the preparation of the copolyesters of this invention provided the properties of the copolyesters are not substantially altered. Examples of such acids are 2,6-naphthalenedicarboxylic acid, 4,4′-oxydibenzoic acid, monochloroterephthalic acid, dichloroterephthalic acid, methylterephthalic acid, dimethylterephthalic acid, 4,4′-diphenyldicarboxylic acid, isophthalic acid, or methylisophthalic acid, Preferably, terephthalic acid is the only acid used.

The copolyesters of this invention are made by conventional techniques, such as by acidolysis of phenylhydroquinone diacetate and hydroquinone diacetate with terephthalic acid. The reactants are

heated at about 300°C. until most of the monocarboxylic acid has evolved. The temperature of the melt is then increased to about 380—390°C., a vacuum of about 0.5 millimeter is applied and stirring is continued until a high melt viscosity polymer is obtained. If the polymer solidifies, its molecular weight may be increased to a sufficient value by heating particles of the polymer in an inert atmosphere or under reduced pressure at a temperature just below the softening point of the polymer. The molecular weights are high enough for the polymer to be used to form fiber and film. Higher tenacities can be obtained by heating melt-spun fibers in an inert atmosphere or under reduced pressure at 300—330°C. for several hours.

Tough films are obtained by pressing or by extrusion. Molding plastics having very high tensile strength, modulus and heat deflection temperatures are obtained by injection-molding at about 360—400°C.

In addition to exhibiting melt processability and heat resistance, the copolymers of this invention have unexpected chemical resistance.

The following table summarizes the melting points and chemical resistance data of pressed, quenched films (0.13—0,18 mm (5—7 mils) thick) of poly(phenyl-1,4-phenylene terephthalate) modified with 0, 20, 30, 35, 40, and 50 mole percent hydroquinone and exemplifies the unexpected chemical resistance. The solubility was determined by stirring the films in a 60/40 (by weight) solution of phenol/tetrachloroethane at 100°C. for one hour. The solubility of the films was also determined in an even more potent solvent, 65/35 (by volume) solution of methylene chloride/trifluoroacetic acid, at room temperature.

| | | Solubility | |
|---|---|---|---|
| Hydroquinone, Mole Percent | Melting Point, °C.[a] | 60/40 Phenol/ Tetrachloroethane[b] | 65/35 Methylene Chloride/ Trifluoroacetic Acid[c] |
| 0 | 340 | Soluble | Soluble |
| 20 | 330 | Soluble | Soluble |
| 30 | 333 | Insoluble | Soluble |
| 35 | 359 | Insoluble | Partially soluble |
| 40 | 372 | Insoluble | Insoluble |
| 50 | 420 | Insoluble | Insoluble |

[a] Determined with a Perkins-Elmer DSC—2 differential scanning calorimeter.
[b] Determined at 100°C.
[c] Determined at 25°C.

In view of the melting points and solubility characteristics, the preferred copolyesters contain 35—40 mole percent of hydroquinone.

In addition to plastics, films and fibers, the copolyesters of this invention may be fabricated to give other types of shaped objects, such as foamed plastics, extruded shapes and coatings. The copolyesters of this invention also may contain nucleating agents, pigments, glass fibers, asbestos fibers, antioxidants, stabilizers, plasticizers, lubricants and other additives.

The following examples illustrate the copolyesters of this invention.

Example 1

This example illustrates the preparation of a copolyester from terephthalic acid, 30 mole percent hydroquinone dipropionate and 70 mole percent 2-phenylhydroquinone dipropionate. A mixture of 11.6 g. (0.70 mole) terephthalic acid, 4.7 g. (0.021 mole) hydroquinone dipropionate and 14.6 g. (0.049 mole) phenylhydroquinone dipropionate was placed in a 100 ml. flask equipped with a stirrer, a short distillation column and an inlet for nitrogen. The flask was evacuated and purged three times with nitrogen before being lowered into a metal bath maintained at 140°C. The mixture was heated under a nitrogen atmosphere with stirring to a temperature of 295°C. at which point propionic acid began to distill rapidly from the flask. After the reaction mixture was maintained with stirring at this temperature for 90 minutes, the temperature of the bath was increased to 360°C. A vacuum of 0.5 millimeter of mercury was then applied over a period of 5 minutes. After stirring was continued under 0.5 millimeter of mercury at 360°C. for 5 minutes, a medium melt viscosity, opaque, light tan polymer was obtained. The polymer had a crystalline melting point at 333°C. and an inherent viscosity of 1.9. Fibers melt spun from this polymer at 370°C. were heated in a nitrogen atmosphere at 125°C. for one hour, heated to 360°C. over a period of 45 minutes and then heated at 360°C for 15 minutes. The fibers had the

following properties: 2.6 denier per filament, tenacity 17.3 grams per denier, elongation 3.2% and elastic modulus 730 grams per denier.

Example 2

A copolyester was prepared with 0.50 mole (100 mole percent) terephthalic acid, 0.20 mole (40 mole percent) hydroquinone dipropionate and 0.30 mole (60 mole percent) phenylhydroquinone dipropionate by the procedure of Example 1, except the maximum temperature was 395°C. A light tan, opaque, fibrous polymer was obtained. The polymer had a crystalline melting point of 372°C.

Bars molded at 380°C. from this polymer were smooth and tough. Tensile bars (6.35 x 0.95 x 0.16 cm) had a tensile strength of 113,078 kPa at 23°C. and 37,233 kPa at 260°C. Flexure bars (12.7 x 1.27 x 0.32 cm) had a flexural modulus of 130.3 x $10^5$ kPa at 23°C. and 20 x $10^5$ kPa at 260°C.

**Claims**

1. Copolyesters having a film- and fiber-forming molecular weight and consisting of the following divalent radicals

A. 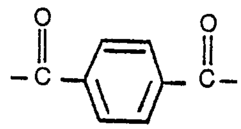

B. 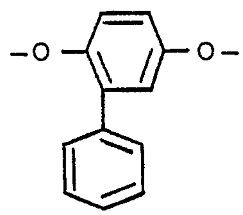 , and

C. 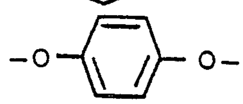

wherein (A) may optionally contain up to 20 mole percent of other aromatic dicarboxylic acid radicals, (B) is present in the amount of 50 to 70 mole percent and (C) is present in the amount of 50—30 mole percent based on total moles of (B) and (C).

2. Copolyesters of Claim 1 wherein (B) is present in the amount of 65 to 60 mole percent and (C) is present in the amount of 35 to 40 mole percent based on (B) and (C).

**Patentansprüche**

1. Copolyester mit einem Folien und Fäden bildenden Molekulargewicht, aufgebaut aus den folgenden divalenten Resten:

A. 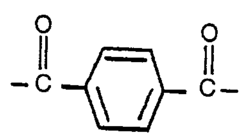

B. 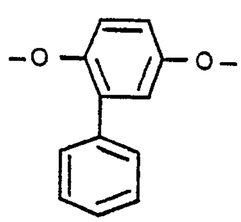 , und

C. 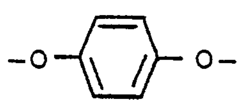

wobei (A) gegebenenfalls bis zu 20 Mol-% andere aromatische Dicarbonsäurereste enthalten kann, (B) in einer Konzentration von 50 bis 70 Mol-% vorliegt und (C) in einer Konzentration von 50 bis 30 Mol-%, bezogen auf die Gesamtmole an (B) und (C) zugegen ist.

2. Copolyester nach Anspruch 1, in denen (B) in einer Konzentration von 65 bis 60 Mol-% vorliegt und (C) in einer Konzentration von 35 bis 40 Mol-%, bezogen auf (B) und (C) zugegen ist.

**Revendications**

1. Copolyesters ayant une masse moléculaire les rendant aptes à la formation de films et de fibres et comprenant les radicaux divalents suivants

A. 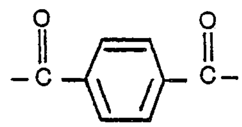

B. 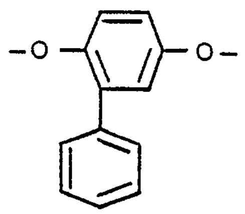 , et

C. 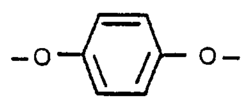

dans lesquels (A) peut contenir éventuellement jusqu'à 20 moles pour cent d'autres radicaux acide dicarboxylique aromatique, (B) est présent en quantité comprise entre 50 et 70 moles pour cent et (C) est présent en quantité comprise entre 50 et 30 moles pour cent, par rapport à la quantité totale en moles de (B) et (C).

2. Copolyesters conformes à la revendication 1, dans lesquels (B) est présent en quantité comprise entre 65 et 60 moles pour cent et (C) est présent en quantité comprise entre 30 et 40 moles pour cent, par rapport à (B) et (C).